# EUROPÄISCHE PATENTSCHRIFT

(11) **EP 1 277 681 B1**
(45) Veröffentlichungstag und Bekanntmachung des Hinweises auf die Patenterteilung: **07.04.2004**
(21) Anmeldenummer: 02014606.4
(22) Anmeldetag: 02.07.2002
(51) Int. Cl.: B65G 69/24, B64F 1/32, B66C 19/00

(54) **Flugzeugbeladevorrichtung**
Loading device for aircrafts
Dispositif de chargement pour aéronefs

(30) Priorität: 16.07.2001 DE 10133815
(43) Veröffentlichungstag der Anmeldung: 22.01.2003
(73) Patentinhaber: Trepel Airport Equipment GmbH, 97941 Tauberbischofsheim (DE)
(72) Erfinder: Reymann, Gottfried, 65191 Wiesbaden (DE); Janik, Veit, 97950 Grossrinderfeld (DE); Pfeiffer, Klaus, 65205 Wiesbaden-Nordenstadt (DE)
(74) Vertreter: Quermann, Helmut, Dipl.-Ing.

(56) Entgegenhaltungen:
- DE-A- 2 130 968
- US-A- 3 225 867
- US-A- 3 524 563

## Beschreibung

Die Erfindung betrifft eine fahrbare Flugzeugbeladevorrichtung mit einem Rahmen, einer relativ zum Rahmen vertikal fahrbaren Hauptplattform und einer relativ zum Rahmen vertikal fahrbaren, an das Flugzeug andockbaren Frontplattform, sowie Kraftmitteln zum unabhängigen Heben und Senken der Plattform, wobei die obere Fläche der jeweiligen Plattform der Aufnahme des zu be- bzw. entladenden Gutes dient, und die Hauptplattform sowie die Frontplattform in vertikalen Streben gelagert sind.

Eine derartige fahrbare Flugzeugbeladevorrichtung ist aus der US-A-3524563 bekannt. Bei dieser sind die Streben, die die Hauptplattform und die Frontplattform aufnehmen, oben frei endend, ausgebildet. Demzufolge weist der Rahmen der Flugzeugbeladevorrichtung nur eine relativ geringe Festigkeit auf.

In der US-A-3225867 ist eine Flugzeugbeladevorrichtung beschrieben, die zwei seitlich angeordnete, vertikale Strebenpaare aufweist, wobei die beiden vertikalen Streben des jeweiligen Strebenpaares am oberen freien Ende mittels einer horizontalen Strebe versteift sind. Es sind so zwei seitliche Portalrahmen ausgebildet, zwischen denen eine heb- und senkbare Plattform zur Aufnahme von Gut angeordnet ist, wobei diese Plattform seitlich in den beiden Portalrahmen gelagert ist.

Eine verfahrbare Flugzeugbeladevorrichtung ist des weiteren aus der DE 37 30 415 C2 bekannt. Bei dieser wird sowohl die Frontplattform als auch die Hauptplattform von Scheren getragen. Jeder Plattform ist ein Scherenpaar zugeordnet. Für das Scherenpaar der Vorderplattform ist zusätzlich ein Aushubzylinder vorgesehen, der an dem die Scheren des Scherenpaares verbindenden Joch angreift. Die Hauptplattform wird mittels zweier Ketten angehoben, die im Bereich von Rollen umgelenkt werden, die mittels vertikal angeordneter Hydraulikzylinder heb- und senkbar sind. Bei dieser Flugzeugbeladevorrichtung haben die Scheren für die jeweilige Plattform sowohl tragende Funktion als auch Führungsfunktion. Das Konstruktionsprinzip der Scheren bedingt eine maximale Förderhöhe der Plattformen, die für besonders große Flugzeuge mit entsprechend hochliegender Beladeebene nicht ausreicht. Bei solchen Flugzeugen befindet sich das Beladeniveau durchaus 8 Meter oder mehr oberhalb der Fahrfläche des Flugzeuges.

Ähnliche Flugzeugbeladevorrichtungen sind aus der DE 21 30 968 A und US 3 993 207 bekannt. Bei diesen ist in die Hauptplattform ein Fördersystem, das aus einer Vielzahl von Förderrollen gebildet ist, integriert.

Aus der Praxis ist es bekannt, größere Förderhöhen durchaus mittels Scheren zu verwirklichen, ohne die Baulänge des Fahrzeuges vergrößern zu müssen. Hierbei kommen zwei oder mehrere übereinander angeordnete Scherensysteme zur Anwendung. Eine solche Gestaltung einer Flugzeugbeladevorrichtung ist baulich sehr aufwendig und kostspielig, andererseits technisch problematisch, da große Lasten, bei einer sehr niedrigen Bauhöhe (520 mm) der Hauptplattform, die systembedingt vorgeschrieben ist, gehoben und gesenkt werden müssen.

In der GB 2 311 506 A ist eine Einrichtung beschrieben, die dem Entladen eines Flugzeuges dient, das an einem Ort gelandet ist, der keine Struktur zum Be- und Entladen des Flugzeuges aufweist. Demzufolge nimmt das Flugzeug diese Struktur auf, die nach dessen Landung auf dem Boden montiert werden muss. Sie weist einen Turm mit vier Eckstreben auf, die über Dach- und seitlich Streben auf dem Boden verankert werden. In diesem Turm wird ein aus dem Fahrzeugrumpf geschobener Scherenhebetisch oben montiert und bei fixierter oberer Ladeplattform dessen Grundrahmen auf den Boden, auf dem der Turm aufsteht, abgesenkt. Nach dem Lösen der oberen Plattform kann diese gesenkt und gehoben werden, zum Ent- bzw. Beladen des Flugzeuges. Die Demontage und Aufnahme der Einrichtung in das Flugzeug erfolgt umgekehrt. Mit einer solchen Einrichtung lassen sich, bedingt durch den Turm, die Scherenkonstruktion und den Einsatz des Flugzeuges in Bereichen ohne Infrastruktur zum Be- und Entladen des Flugzeuges, keine Flugzeuge mit sehr hochliegender Beladeebene laden. Eine Ladevorrichtung, die eine ähnliche Problematik betrifft, ist aus der DE-OS 25 40 395 bekannt.

In der DE 43 31 605 C2 ist ein Transportfahrzeug mit portalförmigem Fahrgestell beschrieben, das dem Transportieren von quaderförmigen Gebilden, wie Papier- oder Pappbogen dient. Das Fahrgestell nimmt vertikal heb- und senkbare Tragorgane auf, die dem Erfassen und Anheben des Bogenstapels mittels einer Transportpalette dienen. Im Fahrgestell sind ferner Klemmorgane gehalten, die als je zwei Platten ausgebildet sind, die auf gegenüberliegende Außenseiten des Bodenstapels einwirken. Hierdurch ist sichergestellt, dass der Bogenstapel beim Verfahren nicht in sich verschoben wird.

Es ist ferner bekannt, Container mittels eines Portalkrans zu verladen. Die balkenartige Tragevorrichtung zur hängenden Aufnahme eines Containers ist in vertikal orientierten Streben des Portalrahmens heb- und senkbar, so dass, aufgrund der Verfahrbarkeit des Portalrahmens auf der Fahrfläche eines Containerterminals Container beliebig verfahren, gestapelt und entstapelt werden können. Mit einem derartigen fahrbaren Portalkran können Stapelhöhen bis zu vier Containern erreicht werden. Bei einem solchen Stapelkran befindet sich in aller Regel die Fahrerkabine im oberen Bereich des Portals. Solche Konstruktionen haben keine Plattform mit Fördereinrichtung.

Aufgabe der Erfindung ist es, bei einer fahrbaren Flugzeugbeladevorrichtung der Eingangs genannten Art die Festigkeit des Rahmens zu erhöhen, sodass mit der Flugzeugbeladevorrichtung Flugzeuge mit besonders großen Ladehöhen be- und entladen werden können.

Gelöst wird die Aufgabe bei einer fahrbaren Flugzeugbeladevorrichtung der Eingangs genannten Art dadurch, dass der Rahmen als Portalrahmen ausgebildet ist, der vier vertikale Eckstreben aufweist, und die Hauptplattform in den Eckstreben gelagert ist, sowie die Frontplattform in den beiden vorderen Eckstreben des Portalrahmens gelagert ist.

Die Erfindung löst sich von den Funktionsprinzip der Verwendung von Scherenkonstruktionen bei fahrbaren Flugzeugbeladevorrichtungen. Statt dessen sind die Hauptplattform und die Frontplattform in den vertikalen Streben des Portalrahmens der Flugzeugbeladevorrichtung gelagert. Entsprechend dem durch den Flugzeugtyp vorgegebenen Belade- bzw. Entladeniveau des Flugzeuges ist der Portalrahmen in seiner Höhe zu dimensionieren. Der Portalrahmen stellt das steife Bauelement dar, in dem die Plattformen definiert geführt werden können. Er dient ferner der Aufnahme des Fahrwerkes und der Aggregate der Flugzeugbeladeeinrichtung, insbesondere derjenigen zum Heben und Senken der Plattformen, der Aggregate zum Betätigen eines zumindest in die Hauptplattform integrierten Fördersystems, des Fahrwerks, eventueller Stützzylinder zum Abstützen des Portalrahmens gegenüber dem Boden beim Be- und Entladen usw.

Die Flugzeugbeladevorrichtung ist insbesondere selbstfahrend, kann aber auch durchaus ohne Antrieb zum Fahren ausgestattet sein, so dass sie geschleppt wird. Das Verfahren der Beladevorrichtung kann mit oder ohne Last erfolgen, wobei sich hierbei die Hauptplattform bevorzugt in einer relativ unteren Stellung befindet. In aller Regel werden in den Ecken des Portalrahmens Räder vorgesehen sein, somit zumindest vier Räder bzw. vier Radpaare. Es sollten zwei oder mehrere Räder bzw. Radpaare antreibbar sein. Vorzugsweise handelt es sich um einen Allradantrieb. Sind alle Räder bzw. Radpaare lenkbar, kann die Flugzeugbeladevorrichtung beliebig verfahren werden, insbesondere längs, quer, im Kreis oder diagonal.

Damit der Be- bzw. Entladevorgang optimal vonstatten gehen kann, sollten die Hauptplattform und die Frontplattform separat heb- und senkbar sein. Vorzugsweise sind zusätzliche Mittel zum Erzeugen einer Querneigung der Frontplattform vorgesehen. Hierdurch kann diese optimal bezüglich der Außenhaut des Flugzeuges ausgerichtet werden. Als Hubantrieb für die Plattformen kommen insbesondere ein elektrischer Antrieb oder die Kombination eines elektrohydraulischen Antriebes in Frage. Es ist auch denkbar als Hubelemente Seiloder Kettenzüge zu verwenden.

Um die Frontplattform besonders einfach an das Flugzeug andocken zu können, ist sie vorzugsweise mit einem teleskopierbaren Ausschub versehen. Die Frontplattform, insbesondere der Ausschub besteht aus einzelnen Segmenten, so dass bei in Außerwirkstellung befindlichen äußeren Segmenten auch Flugzeuge be- bzw. entladen werden könne, deren Tür- bzw. Ladelukenbreite geringer ist.

Die Steuerung und Bedienung der Flugzeugbeladevorrichtung erfolgt vorzugsweise von oben. Es ist insbesondere eine Aufstiegsleiter für den Fahrer im Bereich einer Strebe des Portalrahmens vorgesehen. Die Fahrerkabine bewegt sich zweckmäßig mit der Vorderplattform und ist beispielsweise neben dieser montiert. Gemäß einer besonderen Ausführungsform der Erfindung ist vorgesehen, dass der obere Bereich des Portalrahmens, insbesondere dessen oberes Rahmenprofil der Aufnahme des Antriebes für die Aggregate der Flugzeugbeladeeinrichtung dient. Der darunter befindliche Bereich des Portalrahmens ermöglicht damit die ungehinderte Verfahrbarkeit der Plattformen, insbesondere der Hauptplattform. In diesem Zusammenhang wird es als vorteilhaft angesehen, wenn die Frontplattform außerhalb der vertikalen Projektion des Portalrahmens angeordnet ist.

Um das Gut einfach und schnell im Bereich der Plattformen fördern zu können, sollten die Plattformen mit Fördereinrichtungen versehen sein. Weiter sollten Mittel zum vereinfachten seitlichen Verladen vorgesehen sein. So weist die Hauptplattform beispielsweise in ihrem hinteren Bereich eine Seitenladungsrolle auf und / oder der Portalrahmen seitlich eine sehr tief, somit geringfügig über dem Fahrboden liegende Seitenladungsrolle. Bei abgesenkter Hauptplattform kann über diese Seitenladungsrolle unkompliziert in der Mitte der Flugzeugbeladevorrichtung die Beladung der Hauptplattform erfolgen. Zusätzlich sollte, insbesondere bei einer Lkw-Beladung, eine Heckverladung möglich sein, somit eine Beladung der Hauptplattform über deren hinteres Ende.

Damit die Flugzeugbeladevorrichtung beim Entladen nicht schaukelt oder eine schiefe Position einnimmt, sollten im Bereich der Räder auf den Boden ausfahrbare Stabilisierungsstützen vorgesehen sein. Um die auf dem Flughafenvorfeld gegebenenfalls vorhandenen, minimalen Steigungen mit horizontal orientierten Plattformen befahren zu können, sollten die einzelnen Räder geringfügig hebbar bzw. senkbar sein.

Zweckmäßig kann bei der Flugzeugbeladevorrichtung während des Fahrens die Last gehoben bzw. gesenkt werden.

Insbesondere bei sehr großen Flugzeugen kann die Flugzeugbeladevorrichtung zusätzlich mit einem Personenaufzug versehen sein.

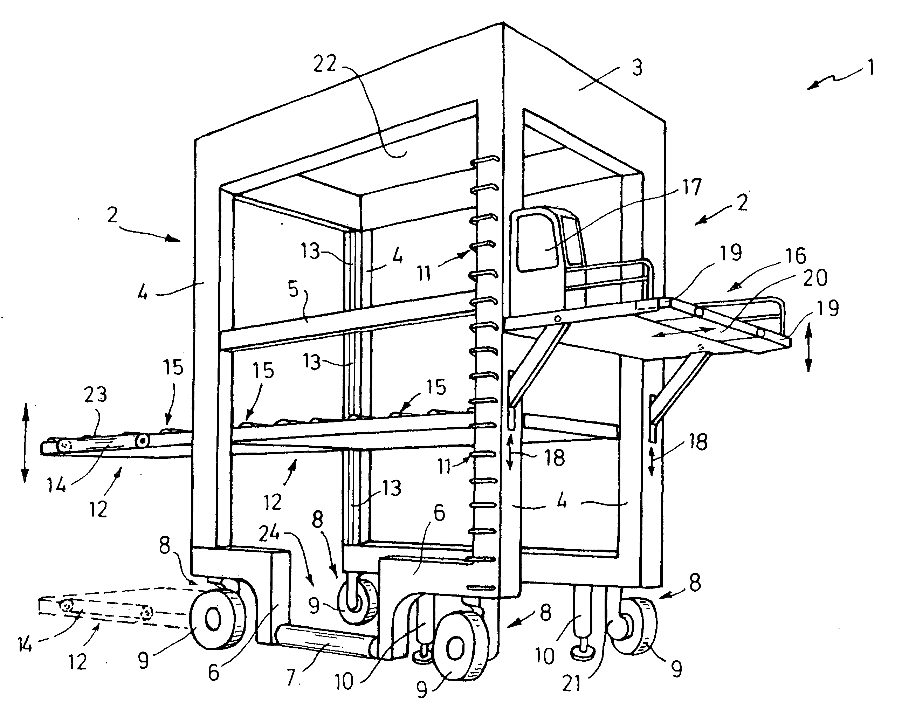

Weitere Merkmale der Erfindung sind in den Unteransprüchen, der Beschreibung der einzigen Figur und Figur selbst dargestellt, wobei bemerkt wird, dass alle Einzelmerkmale und alle Kombination von Einzelmerkmalen weitere erfinderische Ausgestaltungen darstellen.

In der Figur ist die Erfindung anhand eines Ausführungsbeispiels erläutert, ohne hierauf beschränkt zu sein. Diese Figur zeigt die verfahrbare Flugzeugbeladevorrichtung in einer räumlichen Ansicht.

Die verfahrbare Flugzeugbeladevorrichtung 1 besitzt einen Portalrahmen 2. Dieser weist in seinem oberen Bereich ein rechteckiges Rahmenprofil 3 auf. Von den Eckbereichen des Rahmenprofils 3 gehen vier vertikale Streben 4 bzw. Führungsmasten des Portalrahmens 2 ab. Das jeweilige seitliche Strebenpaar ist mittels einer auf mittleren Niveau verlaufenden horizontalen Strebe 5 verbunden. Unten ist das jeweilige seitliche Paar vertikaler Streben 4 verstrebt, und zwar durch zwei L-förmige, in Art eines Radkastens ausgebildete Rahmenteile 6, die eine axial drehbare Seitenladungsrolle 7 verbindet. In jeder Ecke des Portalrahmens 2 ist in der Verlängerung unterhalb der jeweiligen vertikalen Strebe 4 ein Fahrwerk 8 angeordnet, dem im Ausführungsbeispiel ein Rad 9 zugeordnet ist. Jedes Rad 9 ist lenkbar, antreibbar und in Knickbeinen gelagert, so dass die Möglichkeit besteht, das jeweilige Rad anzuheben oder zu senken. Benachbart des jeweiligen Rades 9 ist im zugeordneten Rahmenteil 6 eine Stabilisierungsstütze 10 gelagert, die auf dem Fahrboden senkbar und von diesem anhebbar ist. Im Rahmen einer der beiden vorderen vertikalen Streben 4 ist eine Aufstiegsleiter 11 vorgesehen.

Eine Hauptplattform 12, die in ihrer vertikalen Projektion rechteckig ausgebildet ist, weist eine Breite auf, die geringfügig geringer ist, als der Breitenabstand der vertikalen Streben 4. Die Länge der Hauptplattform 12 ist deutlich größer als das horizontale Längenmass des Portalrahmens 2, so dass die Hauptplattform 12 hinten aus dem Portalrahmen 2 herausragt, beispielsweise um etwa 1/3 ihrer Gesamtlänge. Die Hauptplattform 12 ist in Führungen 13 der vertikalen Streben 4 gelagert. Die Lagerung erfolgt nicht unmittelbar in den Führungen 13, sondern über Schlitten, so dass die Hauptplattform 12 mit ihrer oberen Fläche unter das Niveau der vertikalen Streben 4 bis auf das Niveau der Seitenladungsrolle 7 des Portalrahmens 2 abgesenkt werden kann. Auch der hinten aus dem Portalrahmen 2 herausragende Bereich der Hauptplattform 12 ist zumindest auf einer Seite mit einer Seitenladungsrolle 14 versehen. Die Aufnahme des Gutes dienende obere Fläche 23 der Hauptplattform 12 ist mit einem Fördersystem 15 versehen, das beispielsweise eine Vielzahl antreibbarer rollenartiger Förderelemente aufweist. Vorne, unmittelbar an die Hauptplattform 12 anschließend, ist eine Frontplattform 16 im Portalrahmen 2 vertikal verfahrbar gelagert. Deren Breite ist größer als die der Hauptplattform, da sie außerhalb des Portalrahmens 2 angeordnet und in den Frontseiten der vorderen vertikalen Streben 4 gelagert ist. Die Frontplattform 16 nimmt eine Fahrerkabine 17 auf. Mittels Einzel- Verstellzylindern 18 kann die Frontplattform 16 gehoben, gesenkt und aus der Horizontalen geringfügig quer geneigt werden. Im vorderen Bereich weist die Frontplattform 16 seitlich äußere Klappsegmente 19 und einen dazwischen befindlichen teleskopierbaren, horizontal ein- und ausfahrbaren Plattformabschnitt 20 auf.

Nicht gezeigt ist der Antrieb für die diversen Aggregate der Flugzeugbeladevorrichtung 1, insbesondere zum Heben und Senken der beiden Plattformen 12 und 16, dem Ausfahren des teleskopierbaren Abschnittes 20 der Frontplattform 16, dem Betätigen des Fördersystems 15 und der Seitenladungsrollen 7 und 14, dem Antreiben der Räder 9 und der dazugehörigen Bremsen sowie eines Hubzylinders 21 für den jeweiligen Radsatz. Der Antrieb für diese Aggregate bzw. die Steuerung ist vorzugsweise in dem oberen Bereich 22 des Portalrahmens 2 angeordnet, der vom oberen, kastenartigen Rahmenprofil 3 umschlossen wird.

Gezeigt ist in der Figur die Flugzeugbeladevorrichtung 1 bei im Wesentlichen vollständig angehobener Frontplattform 16 und teilweise angehobener Hauptplattform 12, jeweils ohne auf den Plattformen befindliches Ladegut veranschaulicht.

Mit strichlierten Linien ist für den hinteren Bereich der Hauptplattform 12 deren abgesenkte Stellung veranschaulicht. Die Be- bzw. Entladung im Mittelbereich der Hauptplattform 12 erfolgt über die im Bereich des Durchbruches 24 angeordnete Seitenladungsrolle 7.

Die Figur veranschaulicht, dass aufgrund der gewählten Portalrahmenkonstruktion einerseits eine recht große Hubhöhe der Plattformen durch entsprechende lange Ausbildung der vertikalen Streben 4 verwirklicht werden kann, andererseits eine ausreichende Steifigkeit des Systems durch das obere kastenartige Rahmenprofil 3 und die Lagerung der Hauptplattform 12 und der Frontplattform 16 in den vertikalen Streben 4 gewährleistet ist.

## Patentansprüche

1. Fahrbare Flugzeugbeladevorrichtung (1) mit einem Rahmen (2), einer relativ zum Rahmen (2) vertikal verfahrbaren Hauptplattform (12) und einer relativ zum Rahmen (2) vertikal verfahrbaren, an das Flugzeug andockbaren Frontplattform (16) sowie Kraftmitteln zum unabhängigen Heben und Senken der Plattformen (12, 16), wobei die obere Fläche (23) der jeweiligen Plattform (12, 16) der Aufnahme des zu be- bzw. entladenden Gutes dient, und die Hauptplattform (12) sowie die Frontplattform (18) in vertikalen Streben (4) gelagert sind, **dadurch gekennzeichnet, dass** der Rahmen (2) als Portalrahmen ausgebildet ist, der vier vertikale Eckstreben (4) aufweist, und die Hauptplattform (12) in den Eckstreben (4) gelagert ist, sowie die Frontplattform (16) in den beiden vorderen Eckstreben (4) des Portalrahmens (2) gelagert ist.

2. Vorrichtung nach Anspruch 1, **dadurch gekennzeichnet, dass** der Portalrahmen (2) in vertikaler Projektion im Wesentlichen rechteckigen Querschnitt aufweist und/oder der Portalrahmen (2) quaderförmig ausgebildet ist und/oder der obere Bereich des Portalrahmens (2) als rechteckiges Rahmenprofil (3) ausgebildet ist und/oder die Frontplattform (16) in vertikaler Projektion im Wesentlichen rechteckigen Querschnitt aufweist.

3. Vorrichtung nach Anspruch 1 oder 2, **dadurch gekennzeichnet, dass** die Hauptplattform (12) innerhalb der lichten Breite des Portalrahmens (2) angeordnet ist und mit Ihrem hinteren Bereich aus der vertikalen Projektion des Portalrahmens (2) ragt.

4. Vorrichtung nach einem der Ansprüche 1 bis 3, **dadurch gekennzeichnet, dass** die jeweiligen beiden seitlichen vertikalen Streben (4) mittels mindestens einer Strebe (5; 6), insbesondere einer horizontalen Strebe (5) versteift sind.

5. Vorrichtung nach Anspruch 4, **dadurch gekennzeichnet, dass** eine horizontale Mittelstrebe (5) etwa auf halber Höhe des Portalrahmens (2) und / oder eine untere Strebe (6) im Bereich des Fahrwerks (8) angeordnet sind.

6. Vorrichtung nach Anspruch 5, **dadurch gekennzeichnet, dass** die untere Strebe (6) im Bereich zwischen einem vorderen und hinteren Rad (9) auf der jeweiligen Seite des Portalrahmens (2) einen auf tieferem Niveau liegenden Strebenbereich aufweist.

7. Vorrichtung nach Anspruch 5 oder 6, **dadurch gekennzeichnet, dass** der Portalrahmen (2) auf mindestens einer Seite eine Einrichtung zum seitlichen Beladen der Hauptplattform (12), insbesondere eine horizontale Seitenladungsrolle (7) aufweist.

8. Vorrichtung nach Anspruch 7, **dadurch gekennzeichnet ,dass** die Seitenladungsrolle (7) Bestandteil der unteren Strebe (6) ist, insbesondere durch den auf tieferem Niveau liegendem Strebenbereich der unteren Strebe (6) gebildet ist.

9. Vorrichtung nach einem der Ansprüche 1 bis 8, **dadurch gekennzeichnet, dass** die Frontplattform (16) außerhalb des Portalrahmens (2) angeordnet ist.

10. Vorrichtung nach einem der Ansprüche 1 bis 9, **dadurch gekennzeichnet, dass** eine Fahrerkabine (17) bewegungsschlüssig mit der Frontplattform (16) gekoppelt ist.

11. Vorrichtung nach einem der Ansprüche 1 bis 10, **dadurch gekennzeichnet, dass** Mittel (18) zum Neigen der Frontplattform (16) in Querrichtung vorgesehen sind.

12. Vorrichtung nach einem der Ansprüche 1 bis 11, **dadurch gekennzeichnet, dass** der Frontbereich der Frontplattform (16) mit Segmenten (19) versehen ist, insbesondere einzeln ein- und ausfahrbaren bzw. klappbaren Segmenten (19, 20).

13. Vorrichtung nach einem der Ansprüche 1 bis 12, **dadurch gekennzeichnet, dass** der hintere, aus der vertikalen Projektion des Portalrahmens (2) ragende Bereich der Hauptplattform (12) mit einer Einrichtung zum seitlichen Beladen der Hauptplattform (12), insbesondere einer Seitenladungsrolle (14) versehen ist.

14. Vorrichtung nach einem der Ansprüche 1 bis 13, **dadurch gekennzeichnet, dass** in die Hauptplattform (12) und / oder die Frontplattform (16) ein Fördersystem (15) integriert ist.

15. Vorrichtung nach einem der Ansprüche 1 bis 14, **dadurch gekennzeichnet, dass** der obere Bereich des Portalrahmens (2), insbesondere dessen oberes Rahmenprofil (3) der Aufnahme des Antriebs für die Aggregate der Flugzeugbeladevorrichtung (1) dient.

16. Vorrichtung nach einem der Ansprüche 1 bis 15, **dadurch gekennzeichnet, dass** die Räder (9) des Fahrwerks (8) in den Eckbereichen des Portalrahmens (2) angeordnet sind und/oder die Räder (9) heb- und senkbar sind und/oder die Räder (9) lenkbar sind.

17. Vorrichtung nach Anspruch 16, **dadurch gekennzeichnet, dass** benachbart den Rädern (9) des Fahrwerks (8) Stützzylinder (10) zum Abstützen des Portalrahmens (2) auf dem Boden beim Ausfahren der Stützzylinder (10) vorgesehen sind.

## Claims

1. Drivable aircraft loading apparatus (1) having a frame (2), a main platform (12) drivable vertically relative to the frame (2) and a front platform (16) drivable vertically relative to the frame (2) and dockable with the aircraft and power means for independent lifting and lowering of the platforms (12, 16), whereby the upper surface (23) of the respective platform (12, 16) serves to accept the goods to be loaded or unloaded and the main platform (12) and the front platform (16) are borne in vertical struts (4), **characterised in that** the frame (2) is designed as a portal frame having four vertical corner struts (4) and the main platform (12) is borne in the corner struts (4), and the front platform (16) is borne in the two front corner struts (4) of the portal frame (2).

2. Apparatus according to Claim 1, **characterised in that** the portal frame (2) has a substantially rectangular cross-section in vertical projection and/or the portal frame (2) is designed to be cuboid and/or the upper region of the portal frame (2) is designed as a rectangular frame profile (3) and/or the front platform (16) has a substantially rectangular cross-section in vertical projection.

3. Apparatus according to Claim 1 or 2, **characterised in that** the main platform (12) is arranged within the clear width of the portal frame (2) and projects with its rear region out of the vertical projection of the portal frame (2).

4. Apparatus according to one of the claims 1 to 3, **characterised in that** the respective lateral vertical struts (4) are stiffened by means of at least one strut (5; 6), in particular a horizontal strut (5).

5. Apparatus according to Claim 4, **characterised in that** a horizontal middle strut (5) is arranged approximately at half the height of the portal frame (2) and/or a lower strut (6) is arranged in the region of the chassis (8).

6. Apparatus according to Claim 5, **characterised in that** the lower strut (6) has a strut region at a lower level in the region between the front and rear wheel (9) on the respective side of the portal frame (2).

7. Apparatus according to Claim 5 or 6, **characterised in that** the portal frame (2) has, on at least one side, a device for lateral loading of the main platform (12), in particular a horizontal lateral loading roller (7).

8. Apparatus according to Claim 7, **characterised in that** the lateral loading roller (7) is a component part of the lower strut (6), in particular formed by the strut region of the lower strut (6) lying at a lower level.

9. Apparatus according to one of the claims 1 to 8, **characterised in that** the front platform (16) is arranged outside the portal frame (2).

10. Apparatus according to one of the claims 1 to 9, **characterised in that** a driver's cabin (17) is coupled in movement-fitting manner to the front platform (16).

11. Apparatus according to one of the claims 1 to 10, **characterised in that** means (18) are provided for inclining the front platform (16) in the transverse direction.

12. Apparatus according to one of the claims 1 to 11, **characterised in that** the front region of the front platform (16) is provided with segments (19), in particular individually extensible or foldable segments (19, 20).

13. Apparatus according to one of the claims 1 to 12, **characterised in that** the rear region of the main platform (12) projecting from the vertical projection of the portal frame (2) is provided with a device for lateral loading of the main platform (12), in particular a lateral loading roller (14).

14. Apparatus according to one of the claims 1 to 13, **characterised in that** a conveying system (15) is integrated into the main platform (12) and/or the front platform (16).

15. Apparatus according to one of the claims 1 to 14, **characterised in that** the upper region of the portal frame (2), in particular its upper frame profile (3) serves to accommodate the drive for the assemblies of the aircraft loading system (1).

16. Apparatus according to one of the claims 1 to 15, **characterised in that** the wheels (9) of the chassis (8) are arranged in the corner regions of the portal frame (2) and/or the wheels (9) may be raised and lowered and/or the wheels (9) are steerable.

17. Apparatus according to Claim 16, **characterised in that** adjoining the wheels (9) of the chassis (8), support cylinders (10) are provided for supporting the portal frame (2) on the ground when the support cylinders (10) are extended.

## Revendications

1. Dispositif de chargement mobile d'avions (1) comprenant un cadre (2), une plate-forme principale (12) mobile dans le sens vertical par rapport au cadre (2) et une plate-forme frontale (16) mobile dans le sens vertical par rapport au cadre (2) et pouvant être fixée à l'avion, ainsi que des moyens de force pour monter et descendre indépendamment les plates-formes (12, 16), la surface supérieure (23) de la plate-forme respective (12, 16) servant à recevoir le produit à charger ou à décharger, et la plate-forme principale (12) ainsi que la plate-forme frontale (18) étant logées dans des entretoises verticales (4),
**caractérisé en ce que**
le cadre (2) présente la forme d'un portique avec quatre entretoises d'angle verticales (4), et la plate-forme principale (12) est logée dans les entretoises d'angle (4), la plate-forme frontale (16) étant logée dans les deux entretoises d'angle avant (4) du portique (2).

2. Dispositif selon la revendication 1,
**caractérisé en ce qu'**
en projection verticale le portique (2) présente essentiellement une section transversale rectangulaire, et/ou le portique (2) est parallélépipédique, et/ou la zone supérieure du portique (2) présente la forme d'un profilé de cadre rectangulaire (3), et/ou **en ce qu'**en projection verticale la plate-forme frontale (16) présente essentiellement une section transversale rectangulaire.

3. Dispositif selon la revendication 1 ou 2,
**caractérisé en ce que**
la plate-forme principale (12) est disposée dans la largeur intérieure du portique (2) et saillit par sa zone arrière de la projection verticale du portique (2).

4. Dispositif selon l'une des revendications 1 à 3,
**caractérisé en ce que**
les deux entretoises (4) verticales latérales respectives sont renforcées au moyen d'au moins une entretoise (5 ; 6), notamment d'une entretoise horizontale (5).

5. Dispositif selon la revendication 4,
**caractérisé en ce qu'**
une entretoise centrale (5) horizontale est disposée sensiblement à mi-hauteur du portique (2) et/ou une entretoise inférieure (6) est disposée dans la zone du train de roulement (8).

6. Dispositif selon la revendication 5,
**caractérisé en ce que**
l'entretoise inférieure (6) présente une zone d'entretoise (7) située à un niveau plus bas entre une roue avant et une roue arrière (9) d'un côté respectif du portique (2).

7. Dispositif selon la revendication 5 ou 6,
**caractérisé en ce que**
sur au moins un côté le portique (2) présente une installation pour le chargement latéral de la plate-forme principale (12), notamment un galet de chargement latéral horizontal (7).

8. Dispositif selon la revendication 7,
**caractérisé en ce que**
le galet de chargement latéral (7) fait partie de l'entretoise inférieure (6) et est notamment formé par la zone d'entretoise (7) de l'entretoise inférieure (6) située sur le niveau plus bas.

9. Dispositif selon l'une des revendications 1 à 8,
**caractérisé en ce que**
la plate-forme frontale (16) est disposée à l'extérieur du portique (2).

10. Dispositif selon l'une des revendications 1 à 9,
**caractérisé en ce qu'**
une cabine de conducteur (17) est accouplée par complémentarité de mouvement à la plate-forme frontale (16).

11. Dispositif selon l'une des revendications 1 à 10,
**caractérisé en ce que**
des moyens (18) sont prévus pour incliner la plate-forme frontale (16) dans la direction transversale.

12. Dispositif selon l'une des revendications 1 à 11,
**caractérisé en ce que**
la zone frontale de la plate-forme frontale (16) est munie de segments (19), notamment de segments (19, 20) qu peuvent être sortis ou rentrés séparément ou rabattus.

13. Dispositif selon l'une des revendications 1 à 12,
**caractérisé en ce que**
la zone arrière de la plate-forme principale (12), en saillie de la projection verticale du portique (2), est munie d'une installation pour le chargement latéral de la plate-forme principale (12), notamment d'un galet de chargement latéral (14).

14. Dispositif selon l'une des revendications 1 à 13,
**caractérisé en ce qu'**
un système de transport (15) est intégré dans la plate-forme principale (12) et/ou la plate-forme frontale (16).

15. Dispositif selon l'une des revendications 1 à 14,
**caractérisé en ce que**
la zone supérieure du portique (2), notamment le profilé de cadre supérieur de celui-ci (3) sert à recevoir l'entraînement des unités du dispositif de chargement d'avion (1).

16. Dispositif selon l'une des revendications 1 à 15,
**caractérisé en ce que**
les roues (9) du train de roulement (8) sont disposées dans les zones de coin du portique (2), et/ou les roues (9) peuvent être montées ou descendues, et/ou les roues (9) peuvent être dirigées.

17. Dispositif selon la revendication 16,
**caractérisé en ce qu'**
au voisinage des roues (9) du train de roulement (8) des vérins d'appui (10) sont prévus pour stabiliser le portique (2) au sol.
